Europäisches Patentamt

European Patent Office

Office européen des brevets

(19)

(11) Numéro de publication: **0 203 344**
**A1**

## (12) DEMANDE DE BREVET EUROPEEN

(21) Numéro de dépôt: **86105338.7**

(22) Date de dépôt: **17.04.86**

(51) Int. Cl.⁴: **F16J 1/20** , F16C 19/50

(30) Priorité: **19.04.85 FR 8505980**

(43) Date de publication de la demande:
**03.12.86 Bulletin 86/49**

(84) Etats contractants désignés:
**CH DE FR GB LI NL SE**

(71) Demandeur: **SOCIETE D'ETUDES DE MACHINES THERMIQUES S.E.M.T.**
**2, Quai de Clichy**
**F-93202 Saint-Denis(FR)**

(72) Inventeur: **Froeliger, Jacques**
**50 rue des 4 Vents**
**F-95690 Nesles La Vallee(FR)**

(74) Mandataire: **Weinmiller, Jürgen et al**
**Lennéstrasse 9**
**D-8133 Feldafing(DE)**

(54) **Palier pour piston de machine alternative.**

(57) Dans le palier (10) transmettant les efforts de pression du piston un axe (3) fixé rigidement sur un corps de bielle (2), la portée dudit palier étant divisée en deux secteurs angulaires, la portée du secteur situé côté tête du piston étant continue, et la portée du secteur situé côté bielle comportant un évidement central (15) pour le débattement de la bielle, et la portée du secteur situé côté tête de piston est une portée à roulement à aiguilles.

FIG.1

Palier pour piston de machine alternative

La présente invention concerne un palier pour piston de machine alternative, ce piston transmettant les efforts de pression par l'intermédiaire du palier à un axe fixé rigidement sur une bielle, la portée du palier côté tête de piston étant continue.

Dans les machines alternatives dont les efforts de pression sont toujours appliqués entre axe et piston côté tête de piston, telles que, par exemple, les moteurs à combustion interne à "deux temps", les paliers de piston présentent des difficultés de lubrification. Ceci est dû à la conjugaison d'une pression de contact sur le palier qui ne s'annule jamais et de la présence d'un mouvement oscillant de la bielle par rapport au piston interdisant la formation d'un film d'huile. Un tel palier est décrit dans le brevet US 2 027 035.

Il est entendu que ces difficultés de lubrification sont moindres dans un moteur à combustion interne à "quatre temps", mais le palier selon l'invention peut y être monté sans inconvénients.

Suivant l'art connu, par exemple par le brevet FR 1 019 173, l'utilisation de paliers à roulement permet de résoudre les problèmes de contact axe-palier quel que soit le type de machines alternatives, mais conduit à utiliser un axe monté sur deux paliers distincts situés de part et d'autre de la bielle, ce qui diminue fortement la surface portante entre axe et piston, et par conséquent, les efforts transmissibles.

On connaît également, dans un domaine étranger aux moteurs à combustion interne, par le brevet FR 1 573 042, des glissières à aiguilles utilisées comme points de réaction dans la transmission des efforts nécessaires au serrage des mâchoires de freins d'automobiles.

La juxtaposition de ces différentes solutions conduit à un ensemble hétérogène. En particulier, la succession de plusieurs paliers comportant des chemins de roulement distincts entraîne des difficultés de réalisation en raison du défaut de concentricité conduisant à une inégalité des pressions unitaires.

Le but de la présente invention est de proposer un palier au moins partiellement à roulement pour supprimer les difficultés de lubrification, tout en assurant une portée maximale entre axe et piston et une égalisation des pressions unitaires.

La présente invention a pour objet un palier pour piston de machine alternative, ce piston transmettant les efforts de pression par l'intermédiaire de ce palier à un axe fixé rigidement sur un corps de bielle, la portée dudit palier étant divisée en deux secteurs angulaires, la portée du secteur situé côté tête du piston étant continue, et la portée du secteur situé côté bielle comportant un évidement central pour le débattement de la bielle, caractérisé en ce que la portée du secteur situé côté tête de piston est une portée à roulement à aiguilles.

Selon un premier mode de réalisation du palier, la portée du secteur situé côté bielle est une portée à roulement à aiguilles, une enveloppe monobloc servant de chemin de roulement aux aiguilles dans les deux secteurs angulaires.

Selon un deuxième mode de réalisation du palier, la portée du secteur situé côté bielle est une portée lisse. Selon une première variante de ce mode de réalisation, une enveloppe monobloc sert de chemin de roulement aux aiguilles du secteur situé côté tête de piston, et de logement à deux coussinets du secteur situé côté bielle, et selon une deuxième variante la portée lisse est assurée par deux coussinets indépendants de l'enveloppe qui sert alors uniquement de chemin de roulement aux aiguilles du secteur situé côté tête de piston.

Avantageusement, un ou des passages de fluide pour la lubrification et/ou le refroidissement sont prévus dans l'enveloppe et débouchent en dehors des chemins de roulement.

Il est décrit ci-après, à titre d'exemple et en référence aux dessins annexés, plusieurs modes de réalisation du palier selon l'invention.

La figure 1 représente en coupe un piston équipé d'un palier selon le premier mode de réalisation.

La figure 2 représente le même mode, en coupe selon II de la figure 1.

La figure 3 représente, en perspective, le palier équipant le piston des figures 1 et 2.

Les figures 4 et 5 représente les deux variantes du deuxième mode de réalisation du palier.

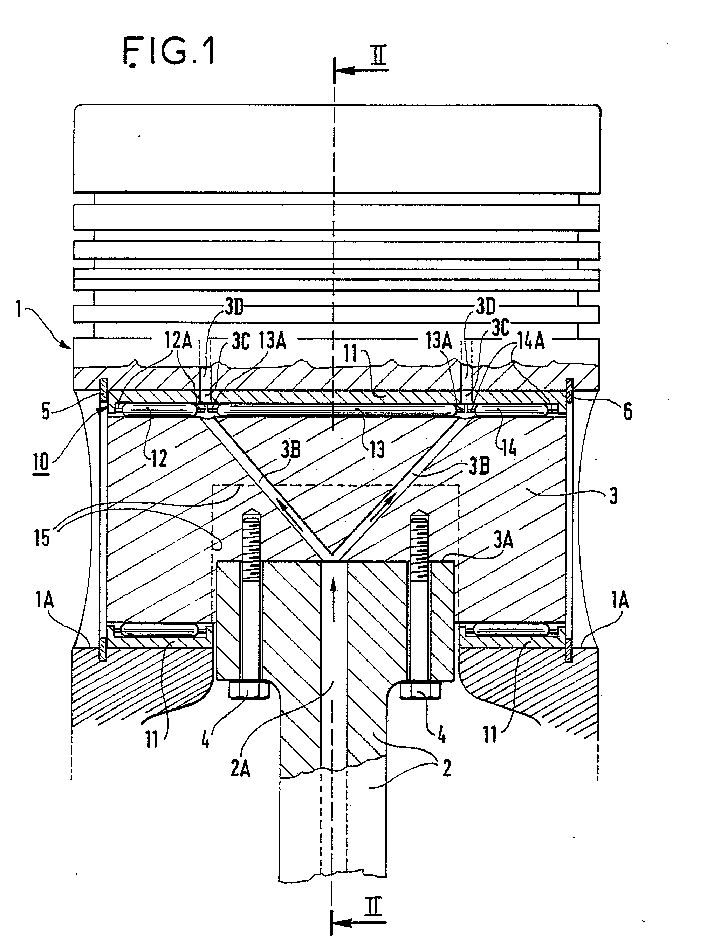

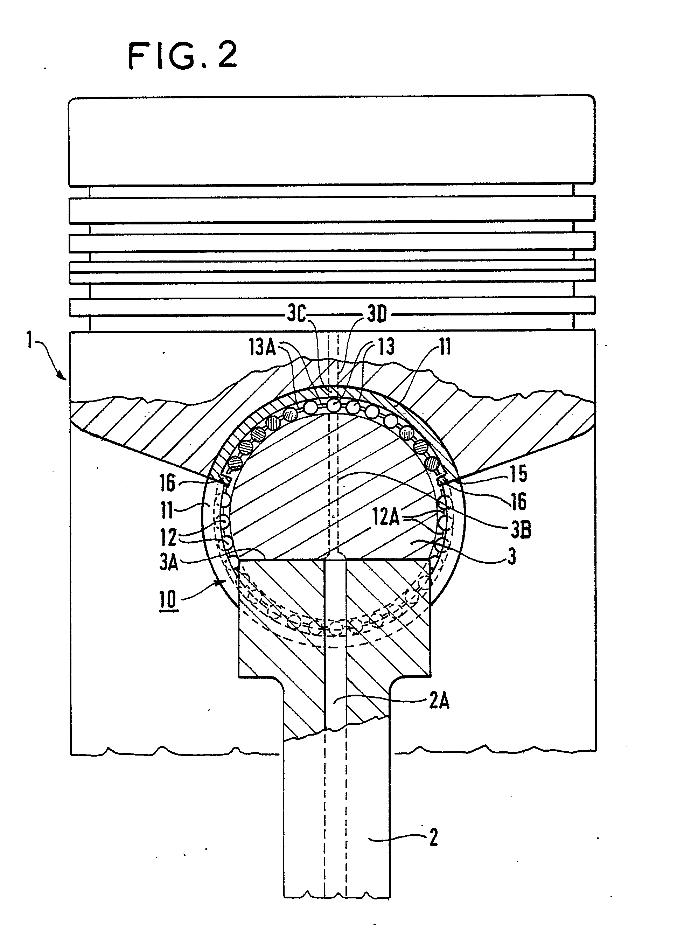

Dans la figure 1, on a représenté un piston 1 articulé sur un corps de bielle 2 par l'intermédiaire d'un axe 3 fixé rigidement sur ce corps de bielle 2 par des vis 4. Le montage de l'axe 3 sur le corps de bielle 2 est mieux visible en figure 2 qui montre un méplat 3A de l'axe 3 sur lequel s'appuit le corps de bielle 2.

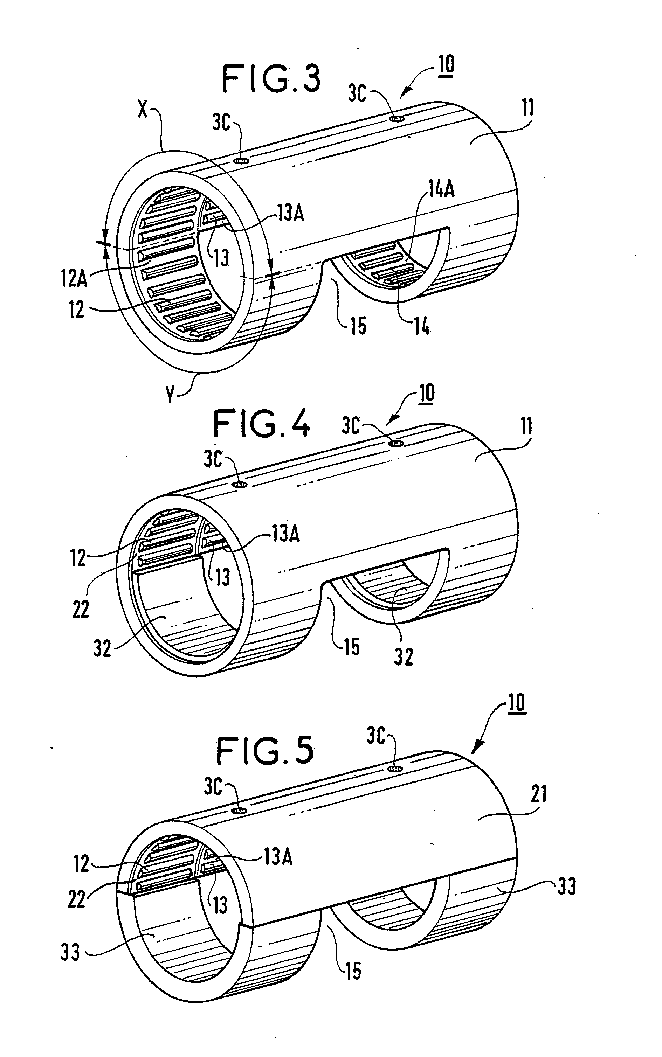

Cet axe 3 tourne dans un palier 10, et ce palier 10 se compose d'une enveloppe 11 monobloc logée dans un alésage transversal 1A du piston 1 et retenue dans cet alésage par deux anneaux d'arrêt 5, 6. L'enveloppe 11 comporte, dans sa partie centrale et côté bielle, un évidement 15, centré par rapport à l'axe principal du piston, qui permet le débattement de la bielle 2. Cet évidement est bien visible figure 3.

Dans la partie centrale complémentaire à l'évidement, c'est-à-dire côté tête du piston, une cage 13A enserre des aiguilles 13 et de chaque côté de l'évidement des cages 12A, 14A enserrent des aiguilles 12, 14 réparties sur toute la circonférence.

Un canal de lubrification 2A traverse le corps de bielle 2, et des canaux 3B de l'axe 3 amènent l'huile de lubrification au palier en dehors des chemins de roulement, c'est-à-dire entre la cage 12A et la cage 13A, et entre cette cage 13A et la cage 14A. Des canaux 3C sont pratiqués dans l'enveloppe 11, en face de canaux 3D du piston 1.

La figure 2 représente une coupe selon II de la figure 1, qui montre, dans le plan de coupe, la partie centrale de l'enveloppe 11 recevant la cage 13A et les aiguilles 13, et dans un plan arrière, l'enveloppe 11 recevant la cage 12A et les aiguilles 12. Au niveau de chaque bord de l'évidement 15, deux épaulements 16 limitent le débattement des aiguilles 13.

La figure 3 représente un mode de réalisation de l'enveloppe tel que celui des figures 1 et 2. L'enveloppe 11 monobloc comporte deux secteurs angulaires X, Y, un secteur supérieur X, dont la portée située côté tête de piston est continue sur toute la longueur de l'enveloppe pour assurer une portée maximale à l'endroit où les efforts ne s'annulent jamais, et un secteur inférieur Y, côté bielle, dont la portée comporte un évidement central 15 pour le débattement de la bielle. Les deux extrémités de l'enveloppe 11 reçoivent chacune une cage 12A et 14A enserrant respectivement les aiguilles 12 et 14, et la partie centrale de la portée du secteur supérieur X reçoit la cage 13A enserrant les aiguilles 13.

La figure 4 représente une première variante du deuxième mode de réalisation utilisant une enveloppe 11 monobloc équivalente à l'enveloppe de la figure 3, la cage 13A enserrant toujours les aiguilles 13. Chaque extrémité de l'enveloppe reçoit une cage 22 enserrant des aiguilles 12 dans tout le secteur supérieur X et un palier lisse 32 logé dans l'enveloppe dans le secteur Y de sorte que ces extrémités de l'enveloppe présentent deux modes de portée distincts.

La figure 5 représente une deuxième variante du deuxième mode de réalisation du palier. L'enveloppe 21 représente uniquement le secteur angulaire supérieur X, et deux paliers lisses 33 représentent le secteur angulaire inférieur Y. Les deux extrémités du palier 10 présentent donc deux modes de portée distincts.

**Revendications**

1/ Palier (10) pour piston (1) de machine alternative, ce piston transmettant les efforts de pression par l'intermédiaire de ce palier à un axe (3) fixé rigidement sur un corps de bielle (2), la portée dudit palier étant divisée en deux secteurs angulaires (X, Y), la portée du secteur (X) situé côté tête du piston étant continue, et la portée du secteur (Y) situé côté bielle comportant un évidement central (15) pour le débattement de la bielle, caractérisé en ce que la portée du secteur (X) situé côté tête de piston est une portée à roulement à aiguilles.

2/ Palier selon la revendication 1, caractérisé en ce que la portée du sceteur (Y) situé côté bielle est une portée à roulement à aiguilles, une enveloppe (11) monobloc servant de chemin de roulement aux aiguilles (12, 13, 14) dans les deux secteurs angulaires (X, Y).

3/ Palier selon la revendication 1, caractérisé en ce que la portée du secteur (Y) situé côté bielle est une portée lisse, une enveloppe (11) monobloc servant de chemin de roulement aux aiguilles (12, 13, 14) du secteur (X) situé côté tête de piston, et de logement à deux coussinets (32) du secteur situé côté bielle.

4/ Palier selon la revendication 11, caractérisé en ce que la portée du secteur (Y) situé côté bielle est une portée lisse assurée par deux coussinets (33), une enveloppe (21) limitée au secteur (X) situé côté tête de piston servant de chemin de roulement aux aiguilles (12, 13, 14) de ce secteur.

5/ Palier selon l'une quelconque des revendications 1 à 4, caractérisé en ce qu'un ou des passages de fluide (3C) pour la lubrification et/ou le refroidissement, sont prévus dans l'enveloppe en dehors des chemins de roulement.

6/ Piston pour machine alternative équipé d'un palier selon l'une des revendications 1 à 5.

FIG.1

# FIG. 2

# FIG.3

# FIG.4

# FIG.5

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int Cl 4) |
|---|---|---|---|
| Y,D | FR-A-1 573 042 (INDUSTRIEWERK) <br> * En entier * | 1 | F 16 J 1/20 <br> F 16 C 19/50 |
| | --- | | |
| Y,D | FR-A- 487 502 (VICKERS) <br> * Page 2, lignes 56-75; figures 6,7 * | 1 | |
| | --- | | |
| Y,D | FR-A-1 019 173 (PITNER) <br> * En entier * | 1 | |
| | --- | | |
| A | US-A-2 027 035 (GEHRES) <br> * En entier * | 1,2 | |
| | ----- | | |

DOMAINES TECHNIQUES
RECHERCHES (Int. Cl.4)

F 16 J
F 16 C

· Le présent rapport de recherche a été établi pour toutes les revendications

| Lieu de la recherche | Date d'achèvement de la recherche | Examinateur |
|---|---|---|
| LA HAYE | 20-08-1986 | LEGER M.G.M. |